# EUROPÄISCHE PATENTSCHRIFT

(11) **EP 3 175 275 B1**
(45) Veröffentlichungstag und Bekanntmachung des Hinweises auf die Patenterteilung: **27.01.2021**
(21) Anmeldenummer: 15748162.3
(22) Anmeldetag: 26.06.2015
(51) Int. Cl.: G02B 6/38

(54) **LICHTWELLENLEITERKABEL, WICKEL, FAHRZEUG UND FAHRZEUGKOMBINATION**
FIBER OPTIC CABLE, WINDING, VEHICLE AND VEHICLE COMBINATION
CÂBLE OPTIQUE, ENROULEMENT, VÉHICULE ET COMBINAISON DE VÉHICULE

(30) Priorität: 28.07.2014 DE 102014110600
(43) Veröffentlichungstag der Anmeldung: 07.06.2017
(73) Patentinhaber: ATLAS ELEKTRONIK GmbH, 28309 Bremen (DE)
(72) Erfinder: LAMBERTUS, Detlef, 27711 Osterholz-Scharmbeck (DE); MEYER, Dennis, 27777 Ganderkesee (DE)
(74) Vertreter: thyssenkrupp Intellectual Property GmbH
(86) Internationale Anmeldenummer: PCT/DE2015/100258
(87) Internationale Veröffentlichungsnummer: WO 2016/015709

(56) Entgegenhaltungen:
- WO-A1-00/22060
- DE-A1- 3 820 950
- JP-A- S60 178 411
- US-A1- 2010 158 452

## Beschreibung

Die Erfindung betrifft ein Lichtwellenleiterkabel, zum Transferieren von optischen Signalen, mit einem optisch transparenten Kern, insbesondere ein Glaskern, einen zugbelastbaren Schutzschirm und einen ersten Stecker, in welchem der transparente Kern definiert geführt ist, sodass an ein Steckergegenstück die optischen Signale einkoppelbar sind, und ein Wickel sowie Fahrzeug und eine Fahrzeugkombination.

In der DE 10 2009 053 742 B4 ist ein Schwimmkörper mit ausgeformten Knickschutz offenbart, welcher an beiden Seiten zugfrei ein Glasfaserkabel führt. Die Zugfreiheit wird dabei insbesondere dadurch realisiert, dass in dem Schwimmkörper für jede Seite ein Wickel vorgesehen ist und die beiden Wickel über eine zugentlastete Verbindung miteinander verbunden sind.

Aufgrund der Wickel ist der Schwimmkörper relativ groß, da das Glasfaserkabel im Wickel wenigstens einen Wickelradius von 4cm aufweist. Dies führt dazu, dass ein Aufwickeln des gesamten Lichtwellenleiterkabels inklusive des Schwimmkörpers vorliegend praktisch nicht möglich ist. Zudem ist es sehr aufwändig entsprechende Wickel in entsprechender Qualität bereitzustellen. Auch ein nachgelagertes erneutes Aufwickeln der Lichtwellenleiterkabel ist extrem aufwändig, da dabei der Schwimmkörper geöffnet und der (abgewickelte) Wickel entnommen werden muss.

Zudem werden derartige Glasfaserkabel bei Zuglasten über 20N zerstört oder in ihrer Funktion beeinträchtigt, sodass es wesentlich ist, keine Zugkräfte dem Glasfaserkabel aufzuprägen. Andere Zugentlastungen für Lichtleiterkabel mit Stecker verwenden einen Behälter, in den der Schutzschirm des Lichtleiterkabels hineinragt und darin mit einer oder zwei Gussmassen vergossen wird (DE3820950, JPS60178411, WO0022060 US20100158452).

Aufgabe der Erfindung ist es den Stand der Technik zu verbessern.

Gelöst wird die Aufgabe durch ein Lichtwellenleiterkabel gemäß Anspruch 1.

Ein wesentlicher Gedanke der Erfindung beruht darauf, dass, entgegen dem angegebenen Stand der Technik, eine Kopplung zweier Lichtwellenleiterkabel nicht zugfrei, sondern zugbelastet durchführbar ist, sodass der Zug über das erste Lichtwellenleiterkabel und über die Steckverbindung zum zweiten Lichtwellenleiterkabel übertragbar ist, ohne dass der transparente Kern dabei zerstört wird.

Somit sind für ein Verbindungstück, welches zwei Glasfaserkabel miteinander verbindet, wobei das erste Glasfaserkabel beispielsweise an einem Unterwasserlaufkörper angeordnet und das zweite Lichtwellenleiterkabel beispielsweise an einem U-Boot angeordnet ist, kleinere Bauformen gegenüber dem Stand der Technik realisierbar.

Zudem kann ein Lichtwellenleiter mit zugehörigem Verbindungsstück bereitgestellt werden, welches auch auf einem Wickel mit aufgewickelt werden kann.

Zudem sind selbst bei sehr dünnen Lichtwellenleiterkabeln mit beispielsweise einem Kerndurchmesser von 50µm Zugkräfte von über 500N ohne Zerstörung des innenliegenden Kerns möglich. Dies ist insbesondere vor dem Hintergrund interessant, da bisherige Glasfaserkabel gemäß dem Stand der Technik spätestens bei einer Zugkraft von 100 N zerstört werden.

### Folgendes Begriffliche sei erläutert:

Ein "Lichtwellenleiterkabel" ist ein dünnes Kabel, welches einen optischen Kern aufweist, über welchen Nachrichtensignale oder Lichtsignale transferierbar sind. Dieser transparente Kern kann durch mehrere Schichten geschützt werden. So kann beispielsweise ein Fasergeflecht, beispielsweise aus Aramid oder aus Stahl den transparenten Kern umwickeln und diese Struktur wiederrum durch eine weitere Schicht, beispielsweise aus PVC oder einem sonstigen Kunststoff, ummantelt sein. Synonyme Wörter für Lichtwellenleiterkabel sind Glasfaserkabel, wobei nicht zwingender Maßen ein Glas den transparenten Kern bilden muss. Auch andere optisch transparente Materialien wie beispielsweise Kunststoffe können eingesetzt werden. Die Wellenlängen der optischen Signale, welche durch das Lichtwellenleiterkabel transferierbar sind, können insbesondere aus dem UV (<400nm), VIS (400nm bis 800nm) oder IR (>800nm) Bereich stammen. Zudem können sich in dem Lichtwellenleiterkabel mehrere Moden ausbilden oder es können viele oder mehrere unterschiedliche Wellenlängen zur Kommunikation eingesetzt werden.

Der "zugbelastbare Schutzschirm" ist insbesondere ein Fasergewebe, welches den transparenten Kern ummantelt. Dieser Schutzschirm kann insbesondere Fasern aus sehr zugstabilen Materialien wie Aramid oder Stahl aufweisen.

Wird nun an einem Lichtwellenleiterkabel, welches einen derartigen zugbelastbaren Schutzschirm aufweist, in einer Richtung eine Zugkraft ausgeübt, so nimmt im Wesentlichen der zugbelastbare Schutzschirm diese Zugkraft auf und der transparente Kern wird von den Zugkräften im Wesentlichen frei gehalten. Dies hat zur Folge, dass gewissermaßen der transparente Kern im Wesentlichen zugfrei gelagert ist. Zudem ist besonders vorteilhaft, dass diverse Kunstharze, wie beispielsweise Epoxidharz sehr gut an den Fasern des Schutzschirms koppeln können, sodass diese Harze mit den Fasern des Schutzschirms quasi eine feste Verbindung eingehen können.

Bei dem "ersten Stecker" handelt es sich um ein Bauteil, an das mechanisch fest andere Bauteile koppelbar sind. Dieser erste Stecker passt in ein diesbezügliches "Steckergegenstück", welches insbesondere wiederrum selbst ein Stecker mit einem Lichtwellenleiterkabel sein kann. In diesem Fall können durch das mit dem ersten Stecker verbundene Steckergegenstück jeweils die optischen Signale über die Lichtwellenleitergrenzen hinweg miteinander koppeln, sodass eine optische Datenübertragung über die Steckverbindungen erreichbar ist.

Unter "optischen Einkoppeln" ist zu verstehen, dass elektromagnetische Signale in die Lichtwellenleiterkabel gelangen und die Signale über die zueinander beabstandeten transparenten Kerne verlustarm geleitet werden können.

Der "vergossene Behälter" ist ein mechanisch fester Bestandteil des ersten Steckers. Weiterhin kann der Behälter auf den Stecker mittels einer Schraubverbindung aufgebracht sein. Durch den Hohlraum, welcher durch den Behälter gebildet wird, wird ein "Guss" beispielsweise aus Epoxidharz eingebracht. Dieser Guss koppelt an dem zugbelastbaren Schutzschirm und den Behälter, sodass eine feste (Klebe-)Verbindung zwischen den zugbelastbaren Schutzschirmen, dem Guss und dem Behälter besteht. Somit können Zugkräfte über den Schutzschirm und dem Guss an den Stecker weitergereicht werden.

In einer weiteren Ausführungsform weist das Lichtwellenleiterkabel einen zweiten Stecker auf, welcher einen mit Guss vergossenen Behälter aufweist, wobei der Guss mechanisch an den Schutzschirm koppelt, sodass eine Zugkraft am Lichtwellenleiterkabel mechanisch auf den zweiten Stecker übertragbar ist.

Somit kann beispielsweise an beiden Seiten eines Lichtwellenleiterkabels eine zugfeste Verbindung zwischen einem Stecker und dem Schutzschirm bereitgestellt werden. An dieser Stelle sei darauf hingewiesen, dass der zweite Stecker im Wesentlichen den gleichen Aufbau aufweisen kann wie der erste Stecker. Damit der Guss eine große Oberfläche hat, an dem dieser mechanisch koppeln kann, kann der Schutzschirm Fasern aus einem ersten Fasermaterial, insbesondere Aramid, und/oder Fasern aus einem zweiten Fasermaterial, insbesondere Stahl, aufweisen. Besonders vorteilhaft ist, wenn Aramid und Stahl jeweils ein Gewebe bilden, welches den optischen Kern ummantelt. Auch können Fasern aus weiteren Fasermaterialien vorgesehen sein.

Eine "Faser" ist insbesondere ein im Verhältnis zu seiner Länge dünnes und flexibles Gebilde, welches aus einem Faserstoff besteht. Vorliegend ist das Verhältnis von Länge zu Durchmesser mindestens 3:1 oder 10:1. Insbesondere haben Fasern vorliegend ein Verhältnis von Länge zu Durchmesser von 1000:1.

Aramide ist eine Bezeichnung für aromatische Polyamide, welche auch als Poly(P-Phenylenterephthalamide)(PPTA) bezeichnet werden.

Der Guss ist zweistufig aufgebaut.

Dadurch kann eine höhere Festigkeit erreicht werden. Der erste Guss koppelt an die Fasern und der zweite Guss an das Behälterinnere oder an den Stecker. Insbesondere kann die Zweistufigkeit dadurch erreicht werden, dass der Behälter zuerst mit dem ersten Gießharz halb gefüllt und anschließend mit einem anderen Gießharz nach Trockenwerden des ersten Gießharz' vollständig aufgefüllt wird.

In einer Zugrichtung sind zuerst die erste Gussstufe und anschließend die zweite Gussstufe angeordnet.

Um die beiden Harze (örtlich) voneinander zu trennen und gegebenenfalls eine gewisse Elastizität in das System einzubringen, kann zwischen den beiden Gussstufen ein Abstandselement, insbesondere O-Ring, angeordnet sein.

Dieses Abstandselement kann auch ein Bestandteil des Behälters sein, welcher in das Behälterinnere ragt, da dadurch ein mechanischer Widerstand auf anliegende Zugkräfte bereitgestellt werden kann.

Der O-Ring kann beispielsweise aus Metall oder auch einem elastischem Material wie Gummi bestehen.

In einer weiteren Ausführungsform weist somit einer der Behälter in einem Gussraum ein Halteelement auf.

Um ein optisches Signal aus dem optischen Kern in einen anderen optischen Kern zu übertragen, kann zum definierten Positionieren des optischen Kerns ein Steckergegenstück vorgesehen sein, welches optisch und mechanisch mit einem der Stecker verbunden ist.

In einer weiteren Ausführungsform weist das Steckergegenstück ein zweites Lichtwellenleiterkabel zum Transferieren von optischen Signalen mit einem zweiten optisch transparenten Kern, insbesondere einem Glaskern, und einen zweiten zugbelastbaren Schutzschirm auf, wobei im Steckergegenstück der zweite transparente Kern definiert geführt ist, sodass in den transparenten Kern des ersten Steckers oder des zweiten Steckers die optischen Signale einkoppelbar sind, wobei das Steckergegenstück einen zweiten mit einem zweiten Guss vergossenen Behälter aufweist, wobei der zweite Guss mechanisch an den zweiten Schutzschirm koppelt, sodass eine Zugkraft am Lichtwellenleiterkabel mechanisch auf das Steckergegenstück und den ersten Stecker oder zweiten Stecker übertragbar ist.

Somit kann durch den ersten Stecker und den zweiten Stecker und dem zugehörigen Steckergegenstück ein Verbindungsstück bereitgestellt werden, welches zwei voneinander getrennte Lichtwellenleiterkabel zu einem Lichtwellenleiterkabel verbindet.

In einem weiteren Aspekt der Erfindung wird die Aufgabe gelöst durch einen Wickel, insbesondere Kreuzwickel, welcher ein zuvor beschriebenes Lichtwellenleiterkabel gemäß Anspruch 1 aufweist.

Insbesondere dadurch, dass vorliegend der Stecker und/oder das Steckergegenstück in kleiner Bauform ausgestaltet werden kann, kann überhaupt erst ein solcher Wickel bereitgestellt werden, der gewährleistet, dass dieser im Einsatzfalle ein verlässlich abwickelbares Lichtwellenleiterkabel bereitstellen kann.

In einem zusätzlichen Aspekt der Erfindung wird die Aufgabe gelöst durch ein Fahrzeug, insbesondere unbemanntes Wasserfahrzeug, welches einen zuvor beschriebenen Wickel mit einem Lichtwellenleiterkabel gemäß Anspruch 1 aufweist.

Bei den vorliegenden Fahrzeugen kann es sich insbesondere um autonome Unterwasserfahrzeuge oder sogenannte ferngesteuerte autonome Unterwasserfahrzeuge (ROV remotely operated underwater vehicle) handeln. Insbesondere wenn derartige unbemannte Unterwasserfahrzeuge für die Mienenjagd eingesetzt werden, ist es vorteilhaft, dass ein leichter - insbesondere im Wasser schwebender - Stecker beziehungsweise leichtes Verbindungsstück in kleiner Bauform bereitgestellt werden kann, welches von einem Wickel abwickelbar ist.

In einem weiteren Aspekt wird die Aufgabe gelöst durch eine Fahrzeugkombination mit einem ersten Fahrzeug und einem zweiten Fahrzeug, wobei das erste Fahrzeug und/oder das zweite Fahrzeug ein zuvor beschriebenes Fahrzeug ist.

Insbesondere bei ROVs, werden diese von einem bemannten Fahrzeug aus betrieben. So können insbesondere das Lichtwellenleiterkabel am bemannten Fahrzeug und das Lichtwellenleiterkabel am ROV jeweils einen zuvor beschriebenen Stecker aufweisen, über die dann eine Verbindung über beide Kabel hinweg gewährleistet werden kann. Zudem kann eine zugfeste und zugbelastbare Verbindung zwischen dem bemannten Schiff und dem unbemannten Unterwasserfahrzeug bereitgestellt werden.

Im Weiteren wird die Erfindung anhand von Ausführungsbeispielen näher erläutert. Es zeigen
- Figur 1: eine stark schematische Schnittdarstellung eines Lichtwellenleiterkabels, an dessen Ende ein zugfester Stecker gekoppelt ist, und

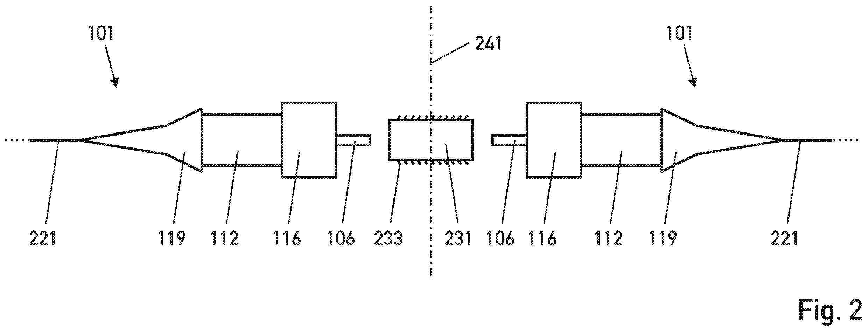

- Figur 2: eine zugfeste Verbindung mit zwei Lichtwellenleitern mit jeweils einem am Ende angeordneten Stecker und einem Steckergegenstück.

Ein Lichtwellenleiterkabel 101 weist einen optischen Glaskern 103 und eine faserige Aramidummantelung 105 auf. Die Aramidummantelung 105 bildet dabei einen sogenannten Schutzschirm. An seinem Ende weist der Glaskern 103 keine Ummantelung auf und wird durch eine Bohrung 107 durch einen Stecker 106 geführt. Der Glaskern 103 hat dabei einen Durchmesser von ca. 50µm und die Bohrung 107 im Stecker 106 hat einen Durchmesser von 51µm, sodass der Glasskern 103 durch die Bohrung 107 führbar ist.

Auf den Stecker 106 ist ein Gussbehälter 112 mittels des Behältergewindes 113 aufgeschraubt. Der Behälter 112 weist einen innenliegenden Steg 114 auf.

In einer Zugrichtung 120 folgt zuerst der erste Guss 108 und dann der zweite Guss 110.

Am Ende des Gussbehälters 112 ist eine Knickschutztülle 119 angeordnet. Weiterhin ist an dem Stecker 106 eine Überwurfmutter 116 mit einem zugehörigen Gewinde 117 angeordnet. Wird nun in Zugrichtung 120 eine Zugkraft auf die Aramidumantelung 105 aufgebracht, überträgt der Aramidschirm 105 diese Zugkraft an den ersten Guss 108 und dieser an den zweiten Guss 110. Da der zweite Guss besonders gut an der Behälteroberfläche haftet und der erste Guss besonders gut an die Aramidfasern haftet, blockiert quasi der zweite Guss 110 zusammen mit dem Steg 114 den ersten Guss, sodass ein Herausreißen des Aramidschirms 105 hoher Kräfte (>500N) bedarf.

Zudem wird über die Kopplung erster, zweiter Guss 108, 110 und Steg 114 sowie Gussbehälter 112 die Zugkraft an den Stecker 106 übertragen. Diese Zugkraft kann wiederrum durch die Überwurfmutter und dem Gewinde auf ein weiteres Bauteil übertragen werden.

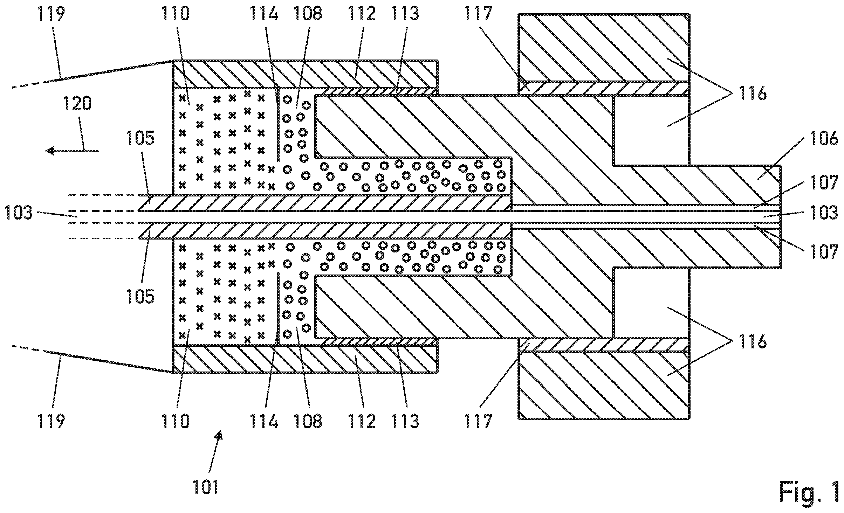

Im Weiteren wird beschrieben wie zwei Glasfaserkabel mit jeweils einem Steckeraufbau, wie dieser zuvor dargestellt wurde (siehe Figur 1), und einem Steckergegenstück verbunden werden. Insbesondere wird der Stecker 106 in den Verbindungsadapter 231 eingebracht. Zusätzlich werden über die Gewinde 233 des Verbindungsadapters 231 die Überwurfmuttern 116 bis zum Anschlag aufgeschraubt. In der Endposition sind die beiden Stecker 106 so nah beieinander, dass optische Daten von einem zum anderen Stecker übertragbar sind, sodass ein optisches Signal, welches im ummantelten Glaskern 221 eingebracht ist über die Stecker 106 in den jeweils anderen ummantelten Glasfaserkern übertragbar ist. Zudem wird eine an einem Lichtwellenleiterkabel ansetzende Zugkraft über den Kabelmantel, dem ersten Stecker und Verbindungsadapter an den anderen Stecker und den anderen Kabelmantel mechanisch übertragen.

### Bezugszeichenliste

- 101: Lichtwellenleiterkabel
- 103: Glaskern
- 105: Aramidschirm
- 106: Stecker
- 107: Bohrung
- 108: erster Guss
- 110: zweiter Guss
- 112: Gussbehälter
- 113: Behältergewinde
- 114: Steg/O-Ring
- 116: Überwurfmutter
- 117: Gewinde
- 119: Knickschutztülle
- 120: Zugrichtung
- 121: Ummantelter Glaskern
- 231: Verbindungsadapter
- 233: Adaptergewinde
- 241: Symmetrieachse

## Patentansprüche

1. Lichtwellenleiterkabel (101), zum Transferieren von optischen Signalen, mit einem optisch transparenten Kern (103), insbesondere einem Glaskern, einem zugbelastbaren Schutzschirm (105) und einem ersten Stecker (106), in welchem der transparente Kern definiert geführt ist, sodass an ein Steckergegenstück die optischen Signale einkoppelbar sind, wobei der erste Stecker einen mit einem Guss (108) vergossenen Behälter (112) aufweist, wobei der Guss mechanisch an den Schutzschirm koppelt, sodass eine Zugkraft am Lichtwellenleiterkabel mechanisch auf den ersten Stecker übertragbar ist, wobei der Guss zweistufig (108, 110) aufgebaut ist und mittels einer jeweiligen Haftung die erste Gussstufe im Wesentlichen an dem Schutzschirm und die zweite Gussstufe im Wesentlichen an dem Behälter und/oder an dem Stecker koppelt, **dadurch gekennzeichnet, dass** in einer Zugrichtung (120) zuerst die erste Gussstufe (108) und anschließend die zweite Gussstufe (110) angeordnet ist.

2. Lichtwellenleiterkabel nach Anspruch 1, **gekennzeichnet durch** einen zweiten Stecker, welcher einen mit Guss vergossenen Behälter aufweist, wobei der Guss mechanisch an den Schutzschirm koppelt, sodass eine Zugkraft am Lichtwellenleiterkabel mechanisch auf den zweiten Stecker übertragbar ist.

3. Lichtwellenleiterkabel nach Anspruch 1, **dadurch gekennzeichnet, dass** der Schutzschirm Fasern aus einem ersten Fasermaterial, insbesondere Aramid, und/oder Fasern aus einem zweiten Fasermaterial, insbesondere Stahl, aufweist.

4. Lichtwellenleiter nach einem der vorherigen Ansprüche, **dadurch gekennzeichnet, dass** zwischen den beiden Gussstufen ein Abstandselement, insbesondere O-Ring, angeordnet ist.

5. Lichtwellenleiterkabel nach einem der vorherigen Ansprüche, **dadurch gekennzeichnet, dass** einer der Behälter in einem Gussraum ein Halteelement (114) aufweist, sodass beim Aufbringen einer Zugkraft in die Zugrichtung die zweite Gussstufe zusammen mit dem Halteelement die erste Gussstufe blockiert und somit ein Herausziehen des Schutzschirmes verhindert wird.

6. Lichtwellenleiterkabel nach einem der vorherigen Ansprüche, **gekennzeichnet durch** das Steckergegenstück, welches optisch und mechanisch mit einem der Stecker verbunden ist.

7. Lichtwellenleiterkabel nach Anspruch 6, **dadurch gekennzeichnet, dass** das Steckergegenstück ein zweites Lichtwellenleiterkabel, zum Transferieren von optischen Signalen, mit einem zweiten optisch transparenten Kern, insbesondere ein Glaskern, und einen zweiten zugbelastbaren Schutzschirm aufweist, wobei im Steckergegenstück der zweite transparente Kern definiert geführt ist, sodass in den transparenten Kern des ersten Steckers oder des zweiten Steckers die optischen Signale einkoppelbar sind, wobei das Steckergegenstück einen zweiten mit einem zweiten Guss vergossenen Behälter aufweist, wobei der zweite Guss mechanisch an den zweiten Schutzschirm koppelt, sodass eine Zugkraft am Lichtwellenleiterkabel mechanisch auf das Steckergegenstück und den ersten Stecker oder zweiten Stecker übertragbar ist.

8. Wickel, insbesondere Kreuzwickel, zum Bereitstellen eines verlässlich abwickelbaren Lichtwellenleiterkabels, welcher das aufgewickelte Lichtwellenleiterkabel aufweist, **dadurch gekennzeichnet, dass** das Lichtwellenleiterkabel ein Lichtwellenleiterkabel nach einem der Ansprüche 1 bis 7 aufweist.

9. Fahrzeug, insbesondere unbemanntes Wasserfahrzeug, welches einen Wickel nach Anspruch 8 aufweist.

10. Fahrzeugkombination mit einem ersten Fahrzeug und einem zweiten Fahrzeug, wobei das erste Fahrzeug und/oder das zweite Fahrzeug ein Fahrzeug nach Anspruch 9 ist.

## Claims

1. Optical waveguide cable (101), for transmitting optical signals, comprising an optically transparent core (103), in particular a glass core, a tensile-loadable protective screen (105) and a first plug (106) in which the transparent core is guided in a defined manner, so that the optical signals can be coupled into a plug mating piece, wherein the first plug has a container (112) which is cast with a casting (108), wherein the casting is mechanically coupled to the protective screen, so that a tensile force on the optical waveguide cable is mechanically transmitted to the first plug, wherein the casting is of two-stage (108, 110) construction and, by means of respective adhesion, the first casting stage is substantially coupled to the protective screen and the second casting stage is substantially coupled to the container and/or to the plug, **characterized in that** initially the first casting stage (108) and then the second casting stage (110) are provided in a tensile direction (120).

2. Optical waveguide cable according to Claim 1, **characterized by** a second plug, which has a container which is cast with casting, wherein the casting is mechanically coupled to the protective screen, so that a tensile force on the optical waveguide cable can be mechanically transmitted to the second plug.

3. Optical waveguide cable according to Claim 1, **characterized in that** the protective screen contains fibres composed of a first fibre material, in particular aramid, and/or fibres composed of a second fibre material, in particular steel.

4. Optical waveguide according to one of the preceding claims, **characterized in that** a spacer element, in particular O-ring, is arranged between the two casting stages.

5. Optical waveguide cable according to one of the preceding claims, **characterized in that** one of the containers has a holding element (114) in a casting chamber, so that, when a tensile force is applied in the tensile direction, the second casting stage, together with the holding element, blocks the first casting stage and therefore prevents the protective screen from being pulled out.

6. Optical waveguide cable according to one of the preceding claims, **characterized by** the plug mating piece which is optically and mechanically connected to one of the plugs.

7. Optical waveguide cable according to Claim 6, **characterized in that** the plug mating piece has a second optical waveguide cable, for transmitting optical signals, comprising a second optical transparent core, in particular a glass core, and a second tensile-loadable protective screen, wherein the second transparent core is guided in a defined manner in the plug mating piece, so that the optical signals can be coupled into the transparent core of the first plug or of the second plug, wherein the plug mating piece has a second container which is cast with a second casting, wherein the second casting is mechanically coupled to the second protective screen, so that a tensile force on the optical waveguide cable can be mechanically transmitted to the plug mating piece and the first plug or second plug.

8. Winding, in particular cross-winding, for providing a reliably unwindable optical waveguide cable, which has the wound-up optical waveguide cable, **characterized in that** the optical waveguide cable has an optical waveguide cable according to one of Claims 1 to 7.

9. Vehicle, in particular unmanned watercraft, which has a winding according to Claim 8.

10. Vehicle combination comprising a first vehicle and a second vehicle, wherein the first vehicle and/or the second vehicle are/is a vehicle according to Claim 9.

## Revendications

1. Câble à fibres optiques (101) destiné à transférer des signaux optiques, comprenant une âme (103) optiquement transparente, notamment une âme en verre, un écran de protection (105) pouvant recevoir une contrainte de traction et une première fiche (106), dans laquelle l'âme transparente est guidée de manière définie de sorte que les signaux optiques peuvent être injectés au niveau d'une pièce homologue de fiche, la première fiche possédant un récipient (112) scellé avec un moulage (108), le moulage s'accouplant mécaniquement à l'écran de protection de sorte qu'une force de traction sur le câble à fibres optiques peut être transmise mécaniquement à la première fiche, le moulage étant construit en deux niveaux (108, 110) et, au moyen d'une adhérence respective, le premier niveau de moulage s'accouplant sensiblement à l'écran de protection et le deuxième niveau de moulage sensiblement au récipient et/ou à la fiche, **caractérisé en ce que** dans une direction de traction (120), le premier niveau de moulage (108) est disposé en premier et ensuite le deuxième niveau de moulage (110).

2. Câble à fibres optiques selon la revendication 1, **caractérisé par** une deuxième fiche, qui possède un récipient scellé par un moulage, le moulage s'accouplant mécaniquement à l'écran de protection de sorte qu'une force de traction sur le câble à fibres optiques peut être transmise mécaniquement à la deuxième fiche.

3. Câble à fibres optiques selon la revendication 1, **caractérisé en ce que** l'écran de protection possède des fibres en un premier matériau fibreux, notamment de l'aramide, et/ou des fibres en un deuxième matériau fibreux, notamment de l'acier.

4. Câble à fibres optiques selon l'une des revendications précédentes, **caractérisé en ce qu'**un élément d'espacement, notamment un joint torique, est disposé entre les deux niveaux de moulage.

5. Câble à fibres optiques selon l'une des revendications précédentes, **caractérisé en ce que** l'un des récipients possède un élément de maintien (114) dans un espace de moulage, de sorte que lors de l'application d'une force de traction dans la direction de traction, le deuxième niveau de traction, en association avec l'élément de maintien, bloque le premier niveau de moulage et une extraction de l'écran de protection est ainsi empêchée.

6. Câble à fibres optiques selon l'une des revendications précédentes, **caractérisé par** la pièce homologue de fiche qui est reliée optiquement et mécaniquement à l'une des fiches.

7. Câble à fibres optiques selon la revendication 6, **caractérisé en ce que** la pièce homologue de fiche possède un deuxième câble à fibres optiques destiné à transférer des signaux optiques, comprenant une deuxième âme optiquement transparente, notamment une âme en verre, et un deuxième écran de protection pouvant recevoir une contrainte de traction, la deuxième âme transparente dans la pièce homologue de fiche étant guidée de manière définie de sorte que les signaux optiques peuvent être injectés dans l'âme transparente de la première fiche ou de la deuxième fiche, la pièce homologue de fiche possédant un récipient scellé avec un deuxième moulage, le deuxième moulage s'accouplant mécaniquement au deuxième écran de protection de sorte qu'une force de traction sur le câble à fibres optiques peut être transmise mécaniquement à la pièce homologue de fiche et à la première fiche ou la deuxième fiche.

8. Bobinage, notamment bobinage croisé, destiné à fournir un câble à fibres optiques pouvant être déroulé de manière fiable, lequel présente le câble à fibres optiques enroulé, **caractérisé en ce que** le câble à fibres optiques comprend un câble à fibres optiques selon l'une des revendications 1 à 7.

9. Véhicule, notamment véhicule nautique sans équipage, qui comporte un bobinage selon la revendication 8.

10. Combinaison de véhicules comprenant un premier véhicule et un deuxième véhicule, le premier véhicule et/ou le deuxième véhicule étant un véhicule selon la revendication 9.
